# EUROPEAN PATENT SPECIFICATION

(11) **EP 2 586 046 B1**
(45) Date of publication and mention of the grant of the patent: **25.11.2015**
(21) Application number: 10725213.2
(22) Date of filing: 28.06.2010
(51) Int. Cl.: H01G 5/01, H01G 5/14

(54) **VACUUM VARIABLE CAPACITOR**
VARIABLER VAKUUMKONDENSATOR
CONDENSATEUR VARIABLE SOUS VIDE

(43) Date of publication of application: 01.05.2013
(73) Proprietor: Comet AG, 3175 Flamatt (CH)
(72) Inventor: ABRECHT, Mike, CH-2543 Lengnau (CH); BIGLER, Walter, CH-1714 Heitenried (CH); JÄGGI, Philipp, CH-4528 Zuchwil (CH); MILDNER, Mark Joachim, CH-3206 Rizenbach (CH)
(74) Representative: Scheuzger, Beat Otto
(86) International application number: PCT/EP2010/059118
(87) International publication number: WO 2012/000532

(56) References cited:
- BE-A- 516 656
- DE-A1- 19 809 752
- GB-A- 522 564
- US-A- 3 161 812
- US-A- 3 600 787

## Description

The present invention relates to the field of vacuum capacitors. Vacuum capacitors are well known in the prior art, and are used in applications where both high frequencies and high power are required. Common applications include, for example, oscillation circuits for use in high power radio frequency transmission, and high frequency power supplies for use in manufacturing semiconductor solar panels and flat panel displays.

Capacitors comprise two or more conducting surfaces, commonly called electrodes, separated by a dielectric medium. In the case of vacuum capacitors, the dielectric medium is a vacuum. Vacuum capacitors typically require high vacuum (10⁻⁶ Torr or better). The vacuum is maintained inside a gas-tight enclosure, which also encloses the electrodes. A typical enclosure might comprise an insulating ceramic cylinder, fitted with metal collars fastened to the ceramic cylinder by a joining technique which guarantees a hermetic seal so that the high vacuum can be maintained inside the enclosure for the operating lifetime of the capacitor.

Vacuum capacitors fall into two principal categories: those with fixed capacitance, in which the geometric relation between the electrodes remains constant, and variable capacitors, in which the shape, orientation and/or separation of one or both of the electrodes may be varied, thereby varying the capacitance of the device. A bellows arrangement may be used, for example, or a magnet and a coil, or any other arrangement allowing a motion of one of the electrodes with respect to the other electrode(s). The construction of such variable vacuum capacitors, and their operation in radio frequency applications, is well known to those skilled in the art. German patent document DE2752025 , DE19809752, English document GB522564 and Japanese patent document JP11273999 describe typical prior art variable vacuum capacitor arrangements.

The electrodes and the housing of a vacuum capacitor are often chosen for their low electrical losses when a high frequency electric current flows through them. These losses cause the conducting parts, including the electrodes, to heat up, especially in high power applications, with the result that high-power vacuum capacitors must often be equipped with cooling systems. For this reason, prior art vacuum capacitor electrodes have been constructed from copper, which has a low resistivity and consequently lower losses.

The surfaces of the electrodes must be made in such a way as to minimise the possibility of arcing, or any other form of unwanted current flow through the dielectric medium separating the electrodes. Arcing, also known as uncontrolled discharge or dielectric breakdown, occurs when the electric field density at any point between the electrodes exceeds a certain breakdown value. This breakdown value is dependent on a combination of parameters including the applied voltage difference, the depth of vacuum, the gap distance between the electrode (at the point where they are closest to each other), and the physical and electrical characteristics of the surface of the electrodes.

The field strength of a vacuum capacitor is the maximum allowable electric field which can be achieved without the occurrence of such uncontrolled discharges. The field strength ultimately limits the operating voltage of the capacitor for a given electrode separation. It is advantageous to achieve the highest possible field strength in a device, because increasing the field strength permits a vacuum capacitor having a particular geometry to be used for high power applications. Alternatively, for a given application voltage, the geometry (dimensions) of a high field-strength vacuum capacitor can be made smaller than that of a capacitor having a lower field strength. This is most easily seen in the electrostatic relationship E = U/d between the electric field strength E, the potential difference U and the electrode separation d (this relationship is an approximation, since it assumes parallel, planar electrodes with negligible boundary effects).

The choice of electrode material and the surface finish of the electrode are very important to reduce breakdowns or leakage currents at high applied voltages. In Japanese patent application JP11273999, copper is used for the electrodes, which are coated with nickel or chromium. These coating metals are chosen for their hardness and their high melting points.

The choice of vacuum as a dielectric is justified by the fact that it has no electrical losses when an AC, RF, or VHF current flows through the capacitor, and also because it has good recovery potential should a high voltage breakdown occur. Other dielectrics are known to suffer catastrophic and irreversible damage in such breakdowns.

The state of the electrode surfaces has a significant effect on the likelihood of a breakdown occurring. Surface irregularities in the form of micro-protrusions, or the presence of particles or clump of particles on the surface, promote the onset of voltage breakdowns because the protrusions or clumps provide areas where electrons are more easily ejected from the metal surface by field emission, and/or where the ionization and subsequent acceleration of adsorbed particles can be initiated. Both effects can lead to an "avalanche" of electrical charges crossing the intra-electrode medium (the dielectric) in an uncontrolled way. The physics of breakdown phenomena, and especially their initiation, are not yet sufficiently understood, so designing high field-strength electrodes does not follow a pre-established *modus operandi,* but involves empirical material comparisons, experimental surface treatments and high voltage testing to determine the best material and surface properties.

As mentioned above, electrodes for vacuum capacitors are conventionally made of copper because of this material's excellent electrical conductivity (i.e. low losses), and to the acceptably high field strength which can be achieved using copper electrodes. Attempts have been made to increase the maximum field strength of the capacitor by using metals which are harder and have a higher melting point than copper. In Japanese patent application JP11273998, for example, it was proposed to make electrodes one of the following materials: stainless, nickel, molybdenum, niobium, tantalum, titanium, tungsten, monel, copper nickel alloy, and nickel silver. In Japanese patent application JP11273999, it was proposed to coat the electrodes with a material chosen from the same list. These materials were selected for their relative hardness and high melting points, following the accepted wisdom that harder electrode materials with higher melting points reduce the incidence of uncontrolled discharge and therefore allow the use of higher field strengths (ie smaller inter-electrode gaps and/or greater applied voltages).

However, as discussed above, breakdowns are commonly initiated by two principal events: the ejection of electrons from the surface of the electrode and the ionization of particles at the surface of the electrodes. When electrons or ions are ejected from the metal surface, they are accelerated rapidly by the intense electric field towards the other electrode, where their impact heats the surface of the target electrode and causes the ejection of further ions or electrons, which are then accelerated towards the opposite electrode, and so on. If an electrode is made of a harder material with a higher melting point, then the impact and heating effects of the electrons or ions hitting its surface will be reduced: fewer electrons and ions will be ejected from the surface as a result of each electron/ion impact. Using harder materials with higher melting points is thus designed to curb the progression of impact/ejection cycle described above, and the likelihood of an avalanche breakdown is reduced.

However, the use of the harder, higher-melting-point electrode materials mentioned above (stainless, nickel, molybdenum, niobium, tantalum, titanium, tungsten, monel, copper nickel alloy, and nickel silver) instead of copper, or as a coating on copper, also brings disadvantages. These harder metals all have far greater electrical resistivity than copper, for example. The resistivities of molybdenum and tungsten are around 53 nΩ.m, while those of titanium and stainless steel are 420 and 740 nΩ.m respectively. The resistivity of copper, by contrast, is around 17 nΩ.m. The harder, higher-melting-point metals also have significantly lower thermal conductivities, the highest being tungsten, with173 W·m⁻¹·K⁻¹ and molybdenum, with 138 W·m⁻¹·K⁻¹, while the other listed metals have thermal conductivities ranging between 16 W·m⁻¹·K⁻¹ for stainless steel to 90 W·m⁻¹·K⁻¹ for nickel. Copper, by contrast, has a much greater thermal conductivity of around 400 W·m⁻¹·K⁻¹.

The higher resistivities and lower thermal conductivities of these metals are not well suited to carrying the high currents involved in high power, high-frequency applications. Compared with similar copper electrodes, electrodes made of tungsten or molybdenum will dissipate more than 3 times as much electrical energy in the form of heat, and this extra heat will be conducted away through the electrode about 2.5 times less efficiently through copper electrodes. This combination of increased heat generation and less efficient heat transfer means a greatly increased cooling requirement for electrodes made of (or coated with) tungsten or molybdenum. The other metals on the list have significantly worse thermal/resistive behaviour than tungsten and molybdenum.

The aim of the present invention, therefore, is to provide a vacuum capacitor with increased field strength, but without the overheating problems, and the corresponding cooling requirements, described above.

In order to solve the above and other problems with the prior art, the invention proposes the use of one or more electrodes made of aluminium. Because of its relative softness, its low melting point, and practical difficulties of working with aluminium, the metal has not hitherto been considered a suitable electrode material for vacuum capacitor electrodes. However, it has now been established that aluminium does have a combination of electrical, thermal and surface characteristics which mean that, contrary to the expectations of those skilled in the art, a greater field strength can be achieved with aluminium electrodes than with copper electrodes, and without introducing significant extra problems of heat dissipation or increased cooling requirements.

An object of the invention is thus to provide a vacuum capacitor as define in claim 1 having a first electrode and a second electrode separated by a vacuum dielectric, the vacuum capacitor being characterised in that at least one of the first and second electrodes is made of, or coated with, aluminium or an aluminium alloy.

The vacuum capacitor may be a variable vacuum capacitor, comprising capacitance varying means for changing the shape, orientation and/or position of at least one of the first and second electrodes so as to vary the capacitance of the vacuum capacitor. Alternatively, the vacuum capacitor may be a fixed-capacitance vacuum capacitor, in which the shape, orientation and/or position of the first and second electrodes are fixed.

According to one variant of the invention, the vacuum capacitor comprises a housing for enclosing the vacuum dielectric and the first and second electrodes, the housing being at least partially made of aluminium.

The housing may be provided with one or more electrical connectors made at least partly of aluminium, and an insulating part made at least partially of ceramic material.

A further object of the invention is to provide a method of manufacturing a vacuum capacitor as define in claim 6, the vacuum capacitor comprising a housing enclosing a first electrode and a second electrode separated by a vacuum dielectric, the method comprising the step of manufacturing at least one of the first and second electrodes from aluminium.

The housing may comprise at least one conducting part made at least partially of aluminium, and at least one insulating part made at least partially of a ceramic material, the method comprising the step of joining the conducting part to the insulating part using a vacuum brazing process. According to one embodiment of the method of the invention, the vacuum brazing process is a fluxless brazing process. Such a brazing process can be carried out without introducing any materials which may subsequently outgas into the vacuum chamber. The ceramic material may advantageously comprise an oxide of aluminium.

According to a further variant of the method of the invention, the method comprises the step of mechanically, chemically or electrochemically polishing the capacitative surfaces of the first and/or second electrodes.

In particular, each capacitative surface of the first and/or second electrodes is polished to a mean surface roughness elevation of less than 2 microns and a maximum surface roughness elevation of 5 microns. This process removes as far as possible any protrusions which might act as breakdown initiating regions.

According to a further refinement of the invention, the first and/or second electrode has edges which are rounded to a minimum rounding radius of 40 microns. Removing sharp corners from the electrode geometry further reduces the possibilities for breakdown.

According to another variant of the invention, the vacuum capacitor is made such that the closest distance, in millimetres, between the first and second electrodes is less than 0.02 times the maximum voltage, in kilovolts, to be applied across the first and second electrodes. According to a further refinement, the aluminium of which the first and/or second electrodes and/or the conductive part of the housing are made is at least 99% pure aluminium. It may also be prepared to contain no substances having an outgassing rate greater than 10⁻⁹ torr litre sec⁻¹ cm⁻² at 25°C.

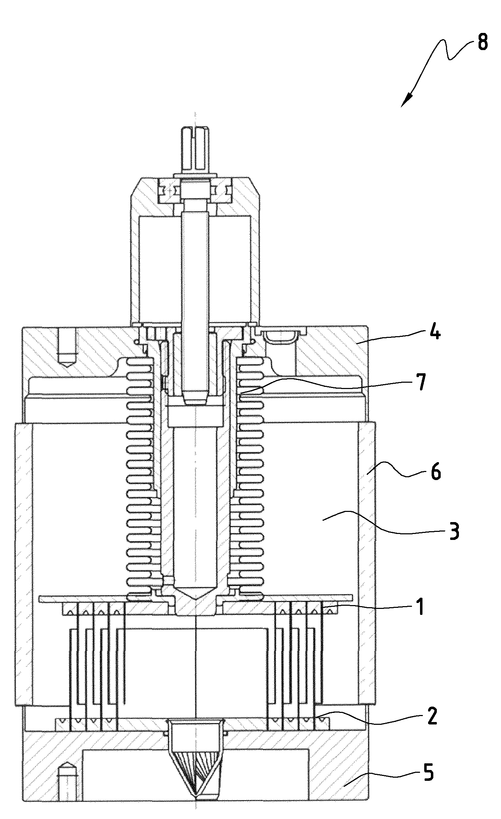

The invention will be described with reference to the attached figure 1, which shows a typical variable vacuum capacitor arrangement. The figure shows an arrangement in which a set of static cylindrical electrodes (2) is interleaved with a set of mobile cylindrical electrodes (1) in a vacuum (3). Bellows (7) allow relative movement of the mobile electrodes while maintaining the integrity of the vacuum (3) in the housing (4, 5, 6). The housing may be made up of a ceramic housing wall (6) bonded or otherwise fixed in a vacuum-tight manner to end elements (4, 5), which may be made of conductive material.

As described above, choosing an electrode surface material of greater hardness and/or melting point can have the effect of curbing or slowing the development of an avalanche breakdown if electrons or ions are ejected from the surface of an electrode. Using aluminium electrodes, on the other hand, reduces the initiation of an avalanche condition by a different process, namely by reducing the incidences of field emission of electrons from the electrode surface.

Aluminium has an electrical resistivity of around 28 nΩ.m (approximately 1.6 times greater than copper) and a thermal conductivity of 237 W·m⁻¹·K⁻¹ (approx. two-thirds of that of copper). These characteristics of the metal are thus comparable with those of copper, especially when compared with the harder, higher-melting-point materials mentioned earlier. However, the main advantage of using aluminium is the reduced field emission of charged electrons from the metal surface. In experiments, in which other parameters were kept strictly equal, it was determined that the field strength achievable with aluminium electrodes was approximately twice the field strength achievable with copper electrodes. The aluminium used in the initial tests was of a high purity, but similar increases can be obtained using aluminium alloyed with other substances.

Where the term "aluminium" is used in this description and in the appended claims, it should be understood that the term also includes aluminium alloys having a significant majority of aluminium content. The expression "made of aluminium" is intended to include the use of alloys containing a majority of aluminium, as well as the use of aluminium coatings on other materials.

Various vacuum compatible joining processes, including vacuum brazing between copper parts and ceramic insulator parts, have been achieved in the prior art and have proven successful for improving the lifetime and operating environments of vacuum capacitors made with copper parts. When choosing a suitable material for the conducting parts of a capacitor, practical manufacturing considerations also play an important role. Copper can be brazed to ceramic insulators in relatively straightforward fashion, and the relative thermal expansion coefficients of copper and commonly-used ceramic insulators are similar enough not to cause problems when brazing. The thermal expansion coefficient of Aluminium is more different from that of such insulators, on the other hand, which means that the brazing process is more difficult, and different brazing processes must be used. This, as well as the lack of appreciation of the advantageous field emission characteristics of aluminium, is an important reason why Aluminium has hitherto not been selected as an electrode material in vacuum capacitors.

Other advantages of using aluminium over copper include, but are not limited to: light weight, the availability of the raw material, its relatively low cost, its machinability, and its alloying possibilities. The difficulties of working with aluminium have hitherto led people to believe that there was no advantage in using this metal. However, as has been described above, it has now been determined that the high field strength which is attainable using aluminium electrodes does in fact justify the use of the material

"Standardized electrodes" were defined in order to make an unambiguous statement on whether copper or aluminium would allow higher field strength electrodes. Such an experiment is not obvious as field strength is an excessively complex phenomenon which not only depends on material type, but also on electrode shape and size, surface roughness, contamination of the surface, material grain size of the metal, and the type and amount of residual gases in the vacuum, to name just a few. In practical terms, so-called conditioning procedures are intentionally performed on vacuum capacitor electrodes to try improving field strength by acting on the aforementioned parameters. To determine the dependency on one parameter only, it is imperative to "freeze" or at least to control the others, hence the use of "standardized electrodes" for the experiments.

In one experiment, "standardized" electrodes were fabricated as so-called Rogowski profile electrodes with nominally identical characteristics except the material itself (OFE copper and high purity aluminium were used). Rogowski profiles were used so as to achieve uniform fields along the electrode surfaces. The high voltage characteristics were then measured in a specially built vacuum chamber to reproduce the environment of electrodes in a vacuum capacitor, but with the advantage of excluding potentially disruptive effects such as those resulting from the presence of ceramics, or from the brazing process linked to the more complex manufacturing of a capacitor device. Using industrially manufactured devices for the experiments would have led to a spread in results which would have been difficult to assign exclusively to the one particular parameters (i.e. the choice of metal) being analysed. Experiments were also carried out to compare more realistically-shaped concentric cylindrical electrodes such as those commonly used in vacuum capacitors, and a substantial increase in field strength, by a factor of about 2, was confirmed when replacing copper with aluminium electrodes.

Better performance is obtained thanks to higher field strength (i.e. the threshold voltage for electrical breakdowns to occur) and other improvements linked to the use of aluminium. As a consequence, higher application voltages can be used with the new vacuum capacitors or alternatively, smaller inter-electrode gaps can be used resulting in overall a smaller-sized vacuum capacitor. Clearly, it is an advantage to be able to use smaller vacuum capacitors with same performance.

While the higher field strength is especially desirable for the electrodes, the other advantages of aluminium compounds listed before are also advantageous for the electrodes and the other conducting parts.

Indeed, using aluminium compounds positively affects the characteristics of fixed and variable vacuum capacitors thanks to the following properties of aluminium: the high field strength, for example due to low electron field emission, its low density, its non-magnetic behaviour, its ease of machining and surface treatment/polishing, its relatively low cost and high availability, its compatibility with high vacuum, its low electrical losses (albeit not quite as low as copper) and its high thermal conductivity (albeit not quite as high as copper). Furthermore, aluminium offers a wide range of alloying possibilities which allow various properties of the metal (melting point, rigidity, brazing ability, hardness etc) to be finely tuned to a particular vacuum capacitor application.

While the invention has been described in the context of a variable capacitor (8), this is for the purposes of illustration only, and the invention may equally be applied in other devices such as fixed vacuum capacitors.

## Claims

1. Vacuum capacitor (8) having a first electrode (1) and a second electrode (2) separated by a vacuum dielectric (3), at least one of the first and second electrodes (1, 2) being made of aluminium, each capacitative surface of the first and/or second electrodes (1,2) having a maximum of 5 microns surface roughness elevation and a mean surface roughness elevation of less than 2 microns.

2. Vacuum capacitor (8) according to claim 1, comprising capacitance varying means for changing the shape, orientation and/or position of at least one of the first and second electrodes (1, 2) so as to vary the capacitance of the vacuum capacitor (8).

3. Vacuum capacitor (8) according to claim 1, wherein the shape, orientation and/or position of the first and second electrodes (1, 2) are fixed.

4. Vacuum capacitor (8) according to one of claims 1 to 3, comprising a housing (4, 5, 6) for enclosing the vacuum dielectric (3) and the first and second electrodes (1, 2), the housing (4, 5, 6) being at least partially made of aluminium.

5. Vacuum capacitor (8) according to claim 4, wherein the housing (4, 5, 6) is provided with one or more electrical connectors (4, 5) made at least partly of aluminium and an insulating part (6) made at least partially of ceramic material.

6. Method of manufacturing a vacuum capacitor (8), the vacuum capacitor (8) comprising a housing (4, 5, 6) enclosing a first electrode (1) and a second electrode (2) separated by a vacuum dielectric (3), the method comprising a first step of manufacturing at least one of the first and second electrodes (1, 2) from aluminium, and a second step of polishing each capacitative surface of the first and/or second electrodes (1, 2) to a maximum of 5 microns surface roughness elevation and a mean surface roughness elevation of less than 2 microns.

7. Method according to claim 6, the housing (4, 5, 6) comprising at least one conducting part (4, 5) made at least partially of aluminium, and at least one insulating part (6) made at least partially of a ceramic material, and the method comprising the step of joining the conducting part (4, 5) to the insulating part (6) using a vacuum brazing process.

8. Method according to claim 7, wherein the vacuum brazing process is a fluxless brazing process.

9. Method according to one of claims 6 to 8, wherein the second step comprises mechanical, chemical or electrochemical polishing the capacitative surfaces of the first and/or second electrodes (1, 2).

10. Vacuum capacitor (8) according to claim 5, or method according to one of claims 6 to 9, wherein the ceramic material comprises an oxide of aluminium.

11. Vacuum capacitor (8) according to one of claims 1 to 5, or method according to one of claims 6 to 9, wherein the first and/or second electrode (1, 2) has edges which are rounded to a minimum rounding radius of 40 microns.

12. Vacuum capacitor (8) according to one of claims 1 to 5, or method according to one of claims 6 to 12, wherein the closest distance, in millimetres, between the first and second electrodes (1, 2) is less than 0.02 times the maximum voltage, in kilovolts, to be applied across the first and second electrodes (1, 2).

13. Vacuum capacitor (8) according to one of claims 1 to 5, or method according to one of claims 6 to 9, wherein the aluminium of which the first and/or second electrodes (1, 2) and/or the conductive part (4, 5) of the housing are made is at least 99% pure aluminium.

14. Vacuum capacitor (8) according to one of claims 1 to 5, or method according to one of claims 6 to 9, wherein the aluminium of which the first and/or second electrodes (1, 2) and/or the conductive part (4, 5) of the housing are made contains no substances having an outgassing rate greater than 10⁻⁹ torr litre sec⁻¹ cm⁻² at 25°C.

15. Method of using a vacuum capacitor (8) according to one of claims 1 to 5, in which a voltage is applied across the first and second electrodes (1, 2), the applied voltage, in kilovolts, being more than 50 times greater than the closest separation distance, in millimetres, between the first and second electrodes (1, 2).

## Patentansprüche

1. Vakuumkondensator (8) mit einer ersten Elektrode (1) und einer zweiten Elektrode (2), die durch ein Vakuumdielektrikum (3) getrennt sind, wobei mindestens eine der ersten und der zweiten Elektrode (1, 2) aus Aluminium besteht, wobei jede kapazitiv wirksame Fläche der ersten und/oder der zweiten Elektrode (1, 2) eine maximale Oberflächenrauheitshöhe von 5 Mikrometern und eine mittlere Oberflächenrauheitshöhe von weniger als 2 Mikrometern aufweist.

2. Vakuumkondensator (8) nach Anspruch 1, der Kapazitätsänderungsmittel zum Ändern der Form, Ausrichtung und/oder Position von mindestens einer von der ersten und der zweiten Elektrode (1, 2) umfasst, um die Kapazität des Vakuumkondensators (8) zu ändern.

3. Vakuumkondensator (8) nach Anspruch 1, bei dem die Form, Ausrichtung und/oder Position der ersten und der zweiten Elektrode (1, 2) unveränderlich sind.

4. Vakuumkondensator (8) nach einem der Ansprüche von 1 bis 3, der ein Gehäuse (4, 5, 6) zum Umschliessen des Vakuumdielektrikums (3) und der ersten und der zweiten Elektrode (1, 2) umfasst, wobei das Gehäuse (4, 5, 6) zumindest teilweise aus Aluminium besteht.

5. Vakuumkondensator (8) nach Anspruch 4, bei dem das Gehäuse (4, 5, 6) mit einem oder mehreren elektrischen Anschlüssen (4, 5), die zumindest teilweise aus Aluminium bestehen, und einem isolierenden Teil (6), der zumindest teilweise aus Keramikmaterial besteht, versehen ist.

6. Verfahren zur Herstellung eines Vakuumkondensators (8), wobei der Vakuumkondensator (8) ein Gehäuse (4, 5, 6) umfasst, das eine erste Elektrode (1) und eine zweite Elektrode (2) umschliesst, die durch ein Vakuumdielektrikum (3) getrennt sind, wobei das Verfahren einen ersten Schritt des Herstellens von mindestens einer von der ersten und der zweiten Elektrode (1, 2) aus Aluminium und einen zweiten Schritt des Polierens von jeder kapazitiv wirksamen Fläche der ersten und/oder der zweiten Elektrode (1, 2) bis zu einer maximalen Oberflächenrauheitshöhe von 5 Mikrometern und einer mittleren Oberflächenrauheitshöhe von weniger als 2 Mikrometern umfasst.

7. Verfahren nach Anspruch 6, wobei das Gehäuse (4, 5, 6) mindestens einen leitenden Teil (4, 5), der zumindest teilweise aus Aluminium besteht, und mindestens einen isolierenden Teil (6), der zumindest teilweise aus einem Keramikmaterial besteht, umfasst, und wobei das Verfahren den Schritt des Verbindens des leitenden Teils (4, 5) mit dem isolierenden Teil (6) unter Verwendung eines Vakuumhartlötverfahrens umfasst.

8. Verfahren nach Anspruch 7, wobei das Vakuumhartlötverfahren ein flussmittelfreies Hartlötverfahren ist.

9. Verfahren nach einem der Ansprüche von 6 bis 8, wobei der zweite Schritt mechanisches, chemisches oder elektrochemisches Polieren der kapazitiv wirksamen Flächen der ersten und/oder der zweiten Elektrode (1, 2) umfasst.

10. Vakuumkondensator (8) nach Anspruch 5 oder Verfahren nach einem der Ansprüche von 6 bis 9, wobei das Keramikmaterial ein Oxid von Aluminium umfasst.

11. Vakuumkondensator (8) nach einem der Ansprüche von 1 bis 5 oder Verfahren nach einem der Ansprüche von 6 bis 9, wobei die erste und/oder die zweite Elektrode (1, 2) Kanten haben, die auf einen minimalen Abrundungsradius von 40 Mikrometern abgerundet sind.

12. Vakuumkondensator (8) nach einem der Ansprüche von 1 bis 5 oder Verfahren nach einem der Ansprüche von 6 bis 12, wobei der engste Abstand in Millimetern zwischen der ersten und der zweiten Elektrode (1, 2) weniger als das 0,02-Fache der über die erste und die zweite Elektrode (1,2) anzulegenden Höchstspannung in Kilovolt beträgt.

13. Vakuumkondensator (8) nach einem der Ansprüche von 1 bis 5 oder Verfahren nach einem der Ansprüche von 6 bis 9, wobei das Aluminium, aus dem die erste und/oder die zweite Elektrode (1, 2) und/oder der leitende Teil (4, 5) des Gehäuses bestehen, Aluminium mit einer Reinheit von mindestens 99% ist.

14. Vakuumkondensator (8) nach einem der Ansprüche von 1 bis 5 oder Verfahren nach einem der Ansprüche von 6 bis 9, wobei das Aluminium, aus dem die erste und/oder die zweite Elektrode (1, 2) und/oder der leitende Teil (4, 5) des Gehäuses bestehen, keine Stoffe enthält, die eine Ausgasungsrate von mehr als 10-9 Torr I s-1 cm-2 bei 25°C aufweisen.

15. Verfahren zur Verwendung eines Vakuumkondensators (8) nach einem der Ansprüche von 1 bis 5, bei dem eine Spannung über die erste und die zweite Elektrode (1, 2) angelegt wird, wobei die angelegte Spannung in Kilovolt mehr als das 50-Fache des engsten Trennabstands in Millimetern zwischen der ersten und der zweiten Elektrode (1, 2) beträgt.

## Revendications

1. Condensateur sous vide (8) possédant une première électrode (1) et une seconde électrode (2) séparées par un diélectrique sous vide (3), au moins une des première et seconde électrodes (1, 2) étant constituée d'aluminium, chaque surface capacitive des première et/ou seconde électrodes (1, 2) possédant un maximum d'élévation de rugosité de surface de 5 micromètres et une élévation moyenne de rugosité de surface inférieure à 2 micromètres.

2. Condensateur sous vide (8) selon la revendication 1, comprenant un moyen de variation de capacité permettant de changer la forme, l'orientation et/ou la position d'au moins une parmi les première et seconde électrodes (1, 2) de façon à faire varier la capacité du condensateur sous vide (8).

3. Condensateur sous vide (8) selon la revendication 1, dans lequel la forme, l'orientation et/ou la position des première et seconde électrodes (1, 2) sont fixes.

4. Condensateur sous vide (8) selon l'une des revendications 1 à 3, comprenant un logement (4, 5, 6) pour enfermer le diélectrique sous vide (3) et les première et seconde électrodes (1, 2), le logement (4, 5, 6) étant au moins partiellement constitué d'aluminium.

5. Condensateur sous vide (8) selon la revendication 4, dans lequel le logement (4, 5, 6) comporte un ou plusieurs connecteurs électriques (4, 5) constitués au moins partiellement d'aluminium et une partie isolante (6) constituée au moins partiellement de matériau céramique.

6. Procédé de fabrication d'un condensateur sous vide (8), le condensateur sous vide (8) comprenant un logement (4, 5, 6) enfermant une première électrode (1) et une seconde électrode (2) séparées par un diélectrique sous vide (3), le procédé comprenant une première étape consistant à fabriquer au moins une parmi les première et seconde électrodes (1, 2) à partir d'aluminium, et une seconde étape consistant à polir chaque surface capacitive des première et/ou seconde électrodes (1, 2) à un maximum d'élévation de rugosité de surface de 5 micromètres et à une élévation moyenne de rugosité de surface inférieure à 2 micromètres.

7. Procédé selon la revendication 6, le logement (4, 5, 6) comprenant au moins une partie conductrice (4, 5) constituée au moins partiellement d'aluminium, et au moins une partie isolante (6) constituée au moins partiellement d'un matériau céramique, et le procédé comprenant l'étape consistant à joindre la partie conductrice (4, 5) à la partie isolante (6) au moyen d'un processus de brasage sous vide.

8. Procédé selon la revendication 7, dans lequel le processus de brasage sous vide est un processus de brasage sans fondant.

9. Procédé selon l'une des revendications 6 à 8, dans lequel la seconde étape comprend un polissage mécanique, chimique ou électrochimique des surfaces capacitives des première et/ou seconde électrodes (1, 2).

10. Condensateur sous vide (8) selon la revendication 5, ou procédé selon l'une des revendications 6 à 9, dans lequel le matériau céramique comprend un oxyde d'aluminium.

11. Condensateur sous vide (8) selon l'une des revendications 1 à 5, ou procédé selon l'une des revendications 6 à 9, dans lequel les première et/ou seconde électrodes (1, 2) possèdent des bords qui sont arrondis à un rayon minimum de courbure de 40 micromètres.

12. Condensateur sous vide (8) selon l'une des revendications 1 à 5, ou procédé selon l'une des revendications 6 à 12, dans lequel la distance la plus proche, en millimètres, entre les première et seconde électrodes (1, 2) est inférieure à 0,02 fois la tension maximale, en kilovolts, à appliquer à travers les première et seconde électrodes (1, 2).

13. Condensateur sous vide (8) selon l'une des revendications 1 à 5, ou procédé selon l'une des revendications 6 à 9, dans lequel l'aluminium dont sont constitués les première et/ou seconde électrodes (1, 2) et/ou la partie conductrice (4, 5) du logement est de l'aluminium pur à au moins 99 %.

14. Condensateur sous vide (8) selon l'une des revendications 1 à 5, ou procédé selon l'une des revendications 6 à 9, dans lequel l'aluminium dont sont constitués les première et/ou seconde électrodes (1, 2) et/ou la partie conductrice (4, 5) ne contient aucune substance possédant un taux de dégazage supérieur à 10⁻⁹ torr litre s⁻¹ à 25 °C.

15. Procédé d'utilisation d'un condensateur sous vide (8) selon l'une des revendications 1 à 5, dans lequel une tension est appliquée à travers les première et seconde électrodes (1, 2), la tension appliquée, en kilovolts, étant plus de 50 fois supérieure à la distance de séparation la plus proche, en millimètres, entre les première et seconde électrodes (1, 2).
